# EUROPEAN PATENT SPECIFICATION

(11) **EP 2 753 053 B1**
(45) Date of publication and mention of the grant of the patent: **07.10.2020**
(21) Application number: 14150481.1
(22) Date of filing: 08.01.2014
(51) Int. Cl.: H04M 1/725, G06F 3/0481, G06F 3/0482, G06F 3/0486

(54) **Method and apparatus for dynamic display box management**
Verfahren und Vorrichtung zur dynamischen Schaukartonverwaltung
Procédé et appareil de gestion de boîte d'affichage dynamique

(30) Priority: 08.01.2013 KR 20130002127
(43) Date of publication of application: 09.07.2014
(73) Proprietor: Samsung Electronics Co., Ltd., Gyeonggi-do 443-742 (KR)
(72) Inventor: Park, Sun-Young, 443-742 Gyeonggi-do (KR)
(74) Representative: HGF

(56) References cited:
- US-A1- 2007 101 297
- US-A1- 2012 216 146
- Pavan Pareta: "Live Tile Templates in Windows Phone 8 - Nokia Developer Wiki", , 15 December 2012 (2012-12-15), XP055114542, Retrieved from the Internet: URL:http://developer.nokia.com/community/w iki/index.php?title=Live_Tile_Templates_in _Windows_Phone_8&oldid=180945 [retrieved on 2014-04-17]
- Anonymous: "How to customise the homescreen on your Nokia Lumia 920 - User guides | Know Your Mobile", , 12 December 2012 (2012-12-12), XP055114590, Retrieved from the Internet: URL:http://www.knowyourmobile.com/nokia/19 019/how-customise-homescreen-your-nokia-lu mia-920 [retrieved on 2014-04-17]

## Description

### BACKGROUND OF THE INVENTION

### 1. Field of the Invention

The present invention relates generally to a method and apparatus for managing applications and files using a display box management system in a terminal.

### 2. Description of the Related Art

Recent mobile devices provide more diverse services and optional functions. To improve the usefulness of mobile devices and meet the different desires of users, various practical applications have been developed.

A mobile device may store and run default applications installed at the manufacturing stage and optional applications downloaded from application sales sites on the Internet. Optional applications may be developed by general developers and registered at sales websites. In this respect, anyone can freely develop and sell his/her application through an application sales site to a user of the mobile device. By these means, tens of thousands to hundreds of thousands of free or paid applications are being provided for current mobile devices.

When one or more applications of the applications are stored in a mobile device, such as a smart phone, tablet PC, and so forth, shortcut keys for executing the respective applications are displayed in the form of icons on the touch screen of the mobile device. By these means, users may execute any desired application on their mobile devices by touching the corresponding icon displayed on the touch screen.

Thus, there is a need for intuitive and easy management of applications and files using display items.

Paven Pareta: "Live Tile Templates in Windows Phone 8 - Nokia Developer Wiki" discloses how to use Windows Phone 8 Live Tiles templates API. A tile is a shortcut of an application, which shows on a start screen and is known as a primary tile or a default tile. An application can also have one or more secondary titles. Windows Phone 8 introduced new tile features such as multiple sizes, customizable, specific page navigation using secondary tiles, and static/dynamic updates.

Anonymous: "How to customize the homescreen on your Nokia Lumia 920 - User Guides | Know Your Mobile" discloses how to add Live Tiles to the Start screen of a Windows Phone 8 device. This document discloses how to move, resize and unpin Live Tiles, and how to change 'Theme' colours.

US-2012/0216146-A1 discloses a method and apparatus for integrating application and task manager information display. The method may include providing for display of available applications and providing for display of active applications, where the available and active applications are displayed concurrently in a list, and where the active applications are each depicted with an enhanced icon.

US-2007/0101297-A1 discloses systems and method for organizing, managing and presenting widgets in display areas associated with multiple dashboard environments.

### SUMMARY

The present invention addresses at least the above problems and provides at least the advantages described below. Accordingly, one aspect of the present invention provides a method and apparatus for managing applications and folders in a mobile terminal using a display box management system that allows a user to intuitively recognize data of the application.

According to a first aspect of the present invention, there is provided a method according to claim 1.

According to a second aspect of the present invention, there is provided a terminal device according to claim 6.

According to a third aspect of the present invention, there is provided a non-transitory computer-readable storage medium according to claim 7.

Also disclosed is a method for display box management on a terminal including identifying a screen on which a display box is located; setting an attribute of the live box according to the identified screen; and displaying data in the display box according to the attribute of the display box.

Also disclosed is a terminal device including a display unit; an input interface; at least one controller; and a memory configured to store at least a display box management program, wherein the display box management program is executed by the controller and comprises instructions for: identifying a screen on which a display box is located; setting an attribute of the display box according to the identified screen; and displaying data in the display box according to the attribute of the display box.

Also disclosed is a non-transitory computer-readable storage medium having stored thereon at least one program which includes instructions for identifying a screen on which a display box is located; setting an attribute of the display box according to the identified screen; and displaying data in the display box according to the attribute of the display box.

Also disclosed is a terminal device including a display unit comprising a touch screen; at least one processor; and a storage unit configured to store at least a display box management program, the display box management program comprising instructions for the at least one processor to perform the step of providing a Graphical User Interface (GUI) configured to display a main home screen on the touch screen and to display an Application (APP) tray screen on the touch screen, the main home screen comprising at least one dynamic display box in which displayed data associated with a corresponding application is updated, and the APP tray screen comprising at least one static display box in which either at least one of data and contents of associated at least one of a file and an application are displayed or a portion of a corresponding application is displayed, which, when selected, provides access to the corresponding application.

### BRIEF DESCRIPTION OF THE DRAWINGS

The above and other aspects, features and advantages of embodiments of the present invention will become more apparent from the following detailed description taken in conjunction with the accompanying drawings, in which:
FIG. 1 is a schematic block diagram showing a mobile terminal according to an embodiment of the present invention;
FIG. 2A is a front perspective view showing a mobile terminal according to an embodiment of the present invention;
FIG. 2B is a rear perspective view showing a mobile terminal according to an embodiment of the present invention;
FIG. 3 is a diagram showing a home screen of a mobile terminal, according to an embodiment of the present invention;
FIGS. 4A to 4G are diagrams showing movement of a display box using a display box management method according to an embodiment of the present invention; and
FIGS. 5A to 5D are diagrams showing management of a folder using a display box management method according to an embodiment of the present invention.

Throughout the drawings, like reference numerals will be understood to refer to like parts, components, and structures.

### DETAILED DESCRIPTION OF EMBODIMENTS OF THE PRESENT INVENTION

Hereinafter, embodiments according to the present invention will be described in detail with reference to the accompanying drawings. However, the present invention is not restricted by the embodiments, and is not limited to the embodiments. Identical reference numerals shown in the drawings denote a member performing a substantially identical function. It is to be understood that the singular forms "a," "an," and "the" include plural referents unless the context clearly dictates otherwise. Thus, for example, reference to "a component surface" includes reference to one or more of such surfaces. Further, although the terms including an ordinal number such as first, second, etc. can be used for describing various elements, the elements are not restricted by the terms. The terms are only used to distinguish one element from another element. For example, a first element could be termed a second element, and similarly, a second element could be also termed a first element without departing from the scope of the present invention. The terms used in the present application are only used to describe specific embodiments, and are not intended to limit the present invention. Singular forms are intended to include plural forms unless the context clearly indicates otherwise.

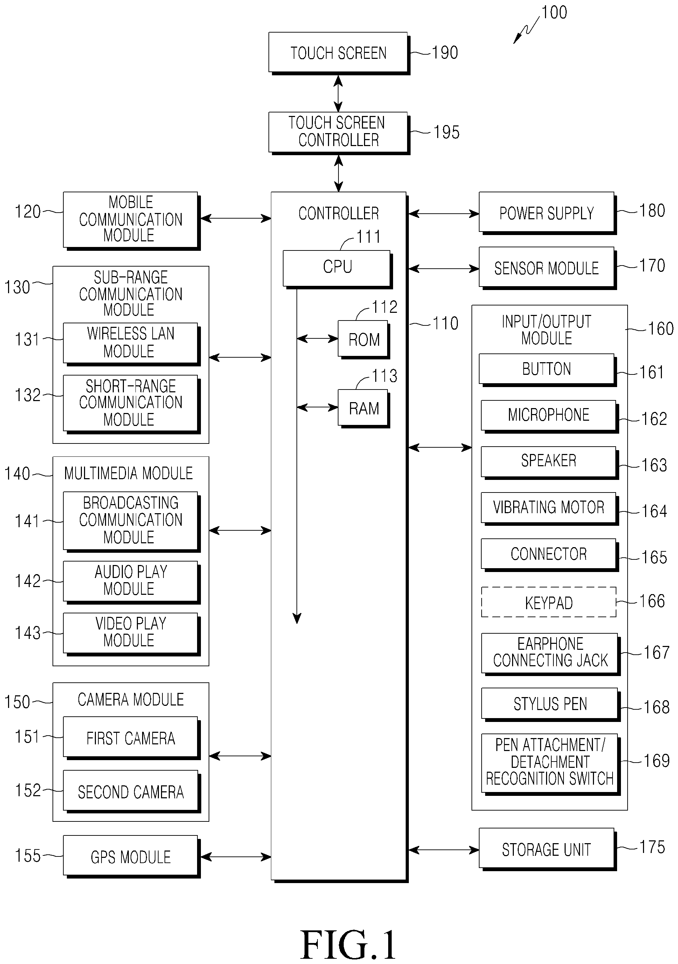

FIG. 1 is a block diagram showing a portable terminal according to an embodiment of the present invention.

Referring to FIG. 1, an electronic device 100 may be communicatively coupled with an external device by using an external device connector such as a sub-range communication module 130, a connector 165, and/or an earphone connecting jack 167. The external device may include various devices such as an earphone, an external speaker, a Universal Serial Bus (USB) memory, a charger, a cradle/dock, a Digital Multimedia Broadcasting (DMB) antenna, a mobile payment related device, a health care device (e.g., a blood sugar measuring device), a game machine, and a vehicle navigation device, which may be detachably connected to the electronic device in a wired manner. Moreover, the external device may include a Bluetooth communication device, a Near Field Communication (NFC) device, a Wi-Fi Direct communication device, and a wireless Access Point (AP), which may be connected to the apparatus 100 in a wireless manner through near field communication. Furthermore, the external device may include other devices such as a cell phone, a smart phone, a tablet PC, a desktop PC, and a server.

Referring to FIG. 1, the electronic device 100 includes a touch screen 190, and a touch screen controller 195.

The electronic device 100 also includes a controller 110, a mobile communication module 120, a sub-range communication module 130, a multimedia module 140, a camera module 150, a GPS module 155, an input/output module 160, a sensor module 170, a storage unit 175, and a power supply unit 180.

The sub-range communication module 130 includes at least one of a wireless LAN module 131 and a short-range communication module 132, and the multimedia module 140 may include at least one of a broadcasting communication module 141, an audio play module 142, and a video play module 143. The camera module 150 includes at least one of a first camera 151 and a second camera 152, and the input/output module 160 includes at least one of a button 161, a microphone 162, a speaker 163, a vibrating motor 164, a connector 165, and a keypad 166. In addition, the input/output module 160 includes a stylus pen 168 and a pen attachment/detachment recognition switch 169.

The controller 110 includes a CPU 111, a ROM 112 in which control programs for control of the electronic device 100 are stored, and a RAM 113 which stores signals or data input from the outside of the electronic device 100, or is used as a memory area for operations performed in the apparatus 100. The CPU 111, the ROM 112, and the RAM 113 may be connected with each other through an internal bus.

The controller 110 controls the mobile communication module 120, the sub-range communication module 130, the multimedia module 140, the camera module 150, the GPS module 155, the input/output module 160, the sensor module 170, the storage unit 175, the power supply unit 180, the touch screen 190, the touch screen controller 195, the display unit 193, and the display controller 194.

The controller 110 may be formed of a single core, a dual core, a triple core, or a quad core.

The mobile communication module 120 allows the electronic device 100 to be connected with an external device through mobile communication by using one or a plurality of antennas under the control of the controller 110. The mobile communication module 120 transmits/receives wireless signals for a voice call, a video call, a short message service (SMS), or a multimedia message service (MMS) to/from a cell phone, a smart phone, a tablet PC, or other devices, having phone numbers which are input to the electronic device 100.

The sub-range communication module 130 includes at least one of the wireless LAN module 131, and the short-range communication module 132. For example, the sub-range communication module 130 may include only the wireless LAN module 131, only the short-range communication module 132, or both the wireless LAN module 131 and the short-range communication module 132.

The wireless LAN module 131 may be connected to the Internet, at the place where the wireless AP is installed, under the control of the controller 100. The wireless LAN module 131 supports the Institute of Electrical and Electronics Engineers (IEEE) wireless LAN protocol IEEE 802.11x. The wireless LAN module 131 may be provided with positional information of the terminal from a Wi-Fi positioning system (WPS) using the wireless AP.

The short-range communication module 132 may perform near field communication in a wireless manner between the electronic device 100 and an image forming device under the control of the controller 110. The short-range communication module 132 may use any of a variety of standards, including Bluetooth, Infrared Data Association (IrDA), Wi-Fi direct communication, and Near Field Communication (NFC).

Depending on the implementation, the electronic device 100 may include at least one of the mobile communication module 120, the wireless LAN module 131, and the short-range communication module 132. Thus, the electronic device 100 may include any combination of the mobile communication module 120, the wireless LAN module 131, and the short-range communication module 132.

The multimedia module 140 includes the broadcasting communication module 141, the audio play module 142, or the video play module 143. The broadcasting communication module 141 receives a broadcasting signal (for example, a TV broadcasting signal, a radio broadcasting signal, or a data broadcasting signal), and additional information (for example, an Electronic Program Guide (EPS), or an Electronic Service Guide (ESG)), which have been transmitted from a broadcasting station through a broadcasting communication antenna, under the control of the controller 110. The audio play module 142 plays digital audio files (for example, files with an extension such as mp3, wma, ogg, and wav) which are stored or received under the control of the controller 110. The video play module 143 plays digital video files (for example, files with an extension such as mpeg, mpg, mp4, avi, mov, and mkv) which are stored or received under the control of the controller 110. The video play module 143 may also play digital audio files.

The multimedia module 140 may include only the broadcasting communication module 141. Moreover, the audio play module 142 or the video play module 143 of the multimedia module 140 may be included in the controller 110.

The camera module 150 includes at least one of the first camera 151 and the second camera 152 for photographing still images and videos under the control of the controller 110. Moreover, the first camera 151 and the second camera 152 may include a light source (for example, a flash) for providing a needed quantity of light for photography.

The first camera 151 may be disposed on a front surface of the apparatus 100, and the second camera 152 may be disposed on a rear surface of the apparatus 100. Otherwise, the first camera 151 and the second camera 152 may be disposed adjacent to each other on the same surface of the apparatus 100. If, for example, the distance between the first camera 151 and the second camera 152 is in the range of 1 cm to 8 cm, the first and second cameras 151 and 152 may photograph three dimensional still images or three dimensional videos.

The GPS module 155 receives signals from a plurality of GPS satellites in earth orbit, and calculates the location of the electronic device 100 using the arrival times of the signals from the GPS satellites to the electronic device 100.

The input/output module 160 may include at least one button 161, the microphone 162, the speaker 163, the vibrating motor 164, the connector 165, and the keypad 166.

The button 161 may be formed on a front surface, a side surface, or a rear surface of a housing of the electronic device 100, and may include at least one of a power/lock button, a volume button, a menu button, a home button, a back button, and a search button.

The microphone 162 receives voices or sounds and generates electronic signals therefrom under the control of the controller 110.

The speaker 163 outputs sounds corresponding to various signals (for example, a wireless signal, a broadcasting signal, a digital audio file, a digital video file, or a photograph) from any of the mobile communication module 120, the sub-range communication module 130, the multimedia module 140, or the camera module 150, under the control of the controller 110. The speaker 163 may output sounds corresponding to functions which the apparatus 100 performs (for example, a button operation tone corresponding to a telephone call, or a call connection tone). One or a plurality of speakers 163 may be formed in any appropriate location or locations of the housing of the apparatus 100.

The vibrating motor 164 converts an electric signal into a mechanical vibration under the control of the controller 110. For example, when receiving a voice call from another device, the apparatus 100 in vibration mode operates the vibrating motor 164. One or a plurality of vibrating motors 164 may be formed in the housing of the apparatus 100. The vibrating motor 164 may operate in response to a touch of a user on the touch screen 190 and/or to a continuous movement of a touch on the touch screen 190.

The connector 165 is an interface for connecting the electronic device 100 with an external device or a power source. The electronic device 100 may transmit data stored in the storage unit 175 of the electronic device 100 to an external device and/or may receive data from an external device through a wired cable connected to the connector 165 under the control of the controller 110. Moreover, the electronic device 100 may receive electric power from a power source through a wired cable connected to the connector 165, or may charge a battery using the same.

The keypad 166 receives key input from the user in order to control the apparatus 100. The keypad 166 may include a physical keypad formed in the electronic device 100 and/or a virtual keypad displayed on the touch screen 190. Whether a physical keypad needs to be formed in the electronic device 100 depends on the implementation and/or the structure of the electronic device 100.

An earphone may be inserted into the earphone connecting jack 167 to be connected to the electronic device 100.

The pen attachment/detachment recognition switch 169 is installed such that the stylus pen 168 directly or indirectly contacts the pen attachment/detachment recognition switch 169 when being mounted on the electronic device 100. For example, the pen attachment/detachment recognition switch 169 may have a protrusion into the space into which the stylus pen 168 is inserted which contacts the stylus pen 168 when it is inserted. In such an implementation, the protusion may be formed to apply a resilient force when the stylus pen 168 is inserted.

Through such a configuration as described above, when the stylus pen 168 is inserted in the electronic device 100, the protrusion of the pen attachment/detachment recognition switch 169 is pressed by, and maintains contact with, the stylus pen 168 When the stylus pen 168 is extracted and detached from the electronic device 100, the protusion protrudes into the empty space into which the stylus pen 168 is inserted. Accordingly, the pen attachment/detachment recognition switch 169 generates and provides a signal for indicating the detachment or attachment of the stylus pen 168, by whether the protusion protrudes into an empty space or is in contact with the stylus pen 168.

The sensor module 170 includes at least one sensor for detecting a condition and/or state of the electronic device 100. For example, the sensor module 170 may include a proximity sensor for detecting proximity of an object, such as the user, to the apparatus 100, an illumination sensor for detecting a quantity of light around the electronic device 100, a motion sensor for detecting motion (for example, rotation, acceleration, and/or vibration of the electronic device 100), a geo-magnetic sensor for detecting a point of the compass using the earth's magnetic field, a gravity sensor for detecting a direction of gravity, and an altimeter for detecting an altitude by measuring atmospheric pressure. At least one sensor may detect the state and/or condition, generate a signal corresponding to the detection, and transmit the signal to the controller 110. Sensors may be added to or omitted from the sensor module 170 depending on the implementation of the electronic device 100.

The storage unit 175 stores signals or data, which may be input and/or output in accordance with operations of the mobile communication module 120, the sub-range communication module 130, the multimedia module 140, the camera module 150, the GPS module 155, the input/output module 160, the sensor module 170, and/or the touch screen 190, under the control of the controller 110. The storage unit 175 may store user applications and/or programs for the control of the electronic device 100 or the controller 110.

The term "storage unit" as used herein includes any one or more of the storage unit 175, the ROM 112 and the RAM 113 in the controller 110, or a memory card (for example, an SD card or a memory stick) which is mounted to the apparatus 100. The storage unit may include a nonvolatile memory, a volatile memory, a hard disk drive (HDD), or a solid state drive (SSD).

The power supply unit 180 may supply electric power to one or a plurality of batteries disposed in the housing of the electronic device 100, which, in turn, supply the electric power to the electronic device 100. The power supply unit 180 may supply electric power, which is input from an external power source through the wired cable connected with the connector 165, directly to the electronic device 100. Furthermore, the power supply unit 180 may receive electric power in a wireless manner from an external power source through wireless charging technology, and, in turn, supply the electric power to the electronic device 100.

The touch screen 190 provides user interfaces corresponding to various services (for example, telephone calls, data transmission, broadcasting, and photography). The touch screen 190 transmits an analog signal corresponding to any contact by the user which is input to the user interface to the touch screen controller 195. The touch screen 190 can detect contact by the user's body (for example, fingers including a thumb) or from a touchable input means (for example, a stylus pen). Moreover, the touch screen 190 can detect a continuous movement of at least one contact and transmit an analog signal corresponding to the continuous movement to the touch screen controller 195.

In the embodiments of the present invention, detectable input from touch screen 190 is not limited to direct contact by the user's body or touchable input means, but also includes noncontact (for example, when the distance between the touch screen 190 and the user's body or the touchable input means is less than or equal to 1 mm). The distance from the touch screen 190 at which input will be detected may be changed according to the implementation or the structure of the electronic device 100. In order to distinguish a direct contact input event and a noncontact input event (for example, hovering), the touch screen 190 is formed such that different values are output when a touch event is detected and when a hovering event is detected. Moreover, the touch screen 190 outputs different values according to the distance between the hovering event and the touch screen 190.

The touch screen 190 may be implemented as a resistive type, a capacitive type, an infrared type, or an acoustic wave type.

The touch screen controller 195 converts the analog signal received from the touch screen 190 to a digital signal (for example, X and Y coordinates), and then transmits the digital signal to the controller 110. The controller 110 may control the touch screen 190 by using the digital signal received from the touch screen controller 195. For example, the controller 110 may allow a shortcut icon displayed on the touch screen 190 to be selected in response to a touch or hovering event, or may execute an operation and/or application corresponding to the shortcut icon. The touch screen controller 195 may be included in the controller 110.

In addition, the touch screen controller 195 may detect the value (for example, the current value) output from the touch screen 190 to identify the distance between where the hovering event is generated and the touch screen 190, and may convert the identified distance value into a digital signal (for example, Z coordinate) which is provided to the controller 110.

Moreover, the touch screen 190 may include at least two touch screen panels capable of separately sensing the touch or the proximity of the user's body and the touchable input means to simultaneously receive inputs by the user's body and the touchable input means. The two touch screen panels provide different output values to the touch screen controller 195, and the touch screen controller 195 recognizes the different values input from the at least two touch screen panels, thereby identifying whether or not the inputs from the touch screens correspond to the input by the user's body, or the input by the touchable input means.

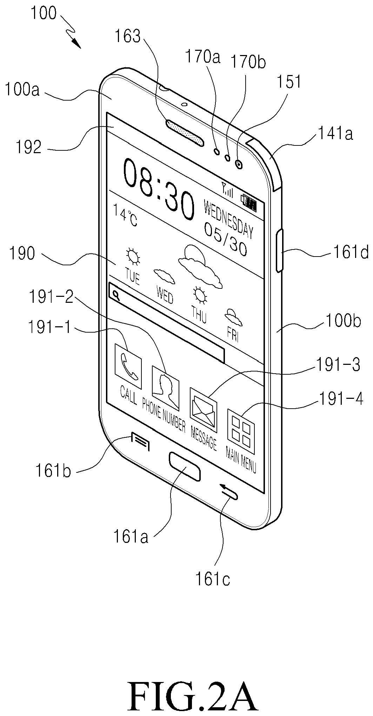

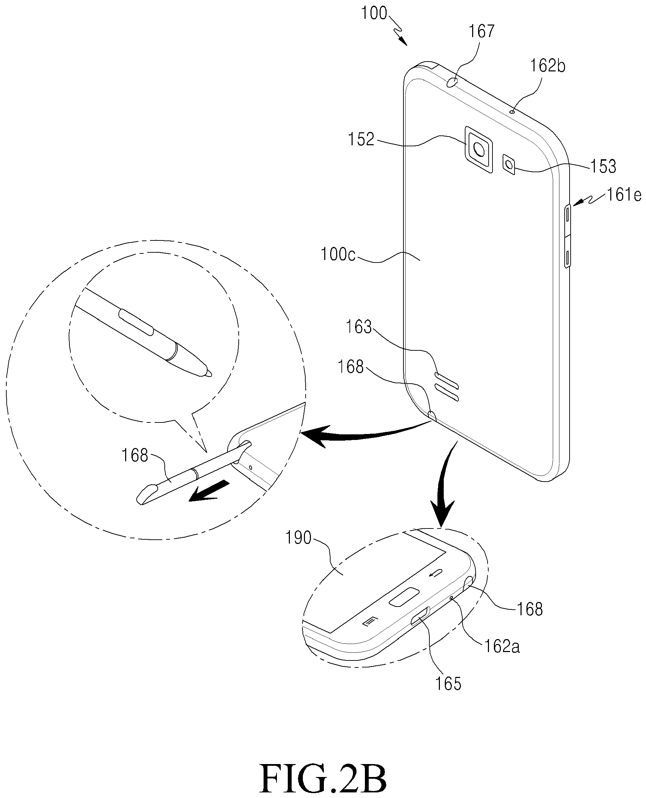

FIG. 2A is a front perspective view and FIG. 2B is a rear perspective view of a portable terminal according to an embodiment of the present invention.

Referring to FIG. 2A, a touch screen 190 is disposed at a central area of a front surface 100a of an apparatus 100. The touch screen 190 occupies most of the front surface 100a of the apparatus 100. FIG. 2A shows an embodiment in which a main home screen is displayed on the touch screen 190. The main home screen is the first screen displayed on the touch screen 190when the power source of the apparatus 100 is turned on. When the main home screen of the apparatus 100 has several pages, i.e., comprises multiple different home screens, the main home screen may correspond to a first home screen of the several pages of home screens. Shortcut icons 191-1, 191-2, and 191-3 for executing frequently used applications, a main menu key 191-4, a time, and weather may be displayed on the home screen. The main menu key 191-4 provides the display of a menu screen on the touch screen 190. Status bar 192 for displaying one or more states and/or conditions of the apparatus 100, such as a battery charging state, an intensity of a received signal, and a current time, is formed at an upper end portion of the touch screen 190.

A home button 161a, a menu button 161b, and a back button 161c are formed at a lower portion of the touch screen 190.

The home button 161a provides the display of the main home screen on the touch screen 190. For example, when the home button 161a is selected in a state where another screen or the main menu screen is being displayed on the touch screen 190, the touch screen 190 switches to display the main home screen. Moreover, if the home button 161a is selected when applications are being executed and displayed on the touch screen 190, the main home screen shown in FIG. 2A is displayed on the touch screen 190. Furthermore, the home button 161a may be used to display recently used applications or a task manager on the touch screen 190.

The menu button 161b provides a connection menu on the touch screen 190. The connection menu may include a widget addition menu, a background image change menu, a search menu, an edition menu, and an environment setup menu.

The back button 161c provides the display of the most recently viewed screen before the currently viewed screen, and/or may terminate the currently running application.

A first camera 151, an illumination sensor 170a, and a proximity sensor 170b may be disposed at an upper edge portion of the front surface 100a of the apparatus 100. As shown in FIG. 2B, a second camera 152, a flash 153, and a speaker 163 may be disposed on the rear surface 100c of the apparatus 100.

Returning to FIG. 2A, a power/reset button 161d and a ground wave DMB antenna 141a are disposed on side surface 100b of the apparatus 100. The DMB antenna 141a may be fixed to the apparatus 100, or may be detachably formed. On the opposite side surface, as shown in FIG. 2B, volume button 161e is disposed.

As shown in FIG. 2B, a connector 165, a microphone 162a, and stylus pen 168 are disposed on a lower side surface of the apparatus 100. A plurality of electrodes is formed in the connector 165 to connect with an external device by wire. The stylus pen 168 is inserted into the apparatus 100 for storage, and is extracted from the apparatus 100 for use.

An earphone jack 167 and microphone 162b are disposed on an upper side surface of the apparatus 100. An earphone may be inserted into the earphone jack 167.

The methods according to embodiments of the present invention may be implemented in the form of computer-executable program instructions stored in non-transitory computer-readable media. The computer-readable media may store program instructions, data files, data structures and the like separately or in combination. The program instructions recorded in the media may be the program instructions which are specially designed and configured for the present invention, or may be the program instructions which are known to those of ordinary skill in the field of computer software.

In methods according to embodiments of the present invention which are implemented in the form of program instructions, the program instructions may be stored in the storage 150 of the device 100 and/or may be temporarily stored in the RAM 113 embedded in the controller 110. Accordingly, when executing the program instructions implementing the methods, the controller 110 may control the hardware components included in the device 100, may temporarily or permanently store the data generated while executing the methods in the storage 150 and/or RAM 113, and may provide User Interfaces (UIs) needed to execute the methods to the touch screen controller 195.

While, for convenience of explanation, an embodiment of the present invention is described as having a display unit that outputs or displays a UI, a GUI, or a menu and a display unit that detects a user's touch input, the present invention is not limited thereto. For example, the display unit may be configured to display various types of information (for example, information generated to perform a call, data transmission, broadcasting, photographs, and so forth), while a separate input device (for example, a keypad, a button, a mouse, or the like) is used for receiving a user's input and may be internally or externally connected to the display unit.

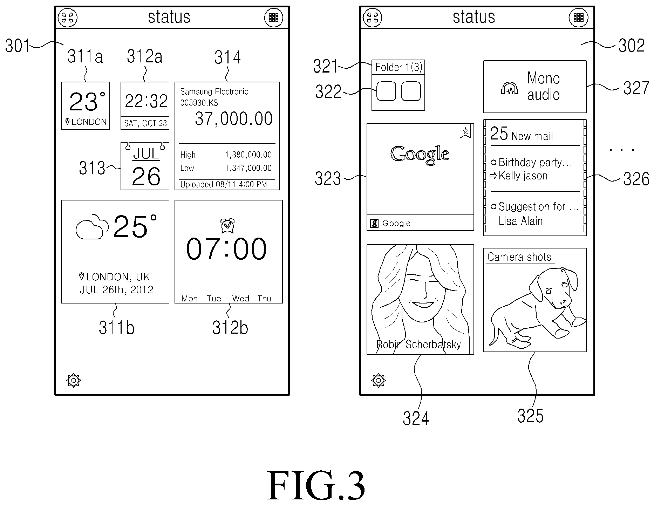

FIG. 3 is a diagram showing a home screen of a terminal, which is displaying display boxes according to an embodiment of the present invention.

In the embodiment shown in FIG. 3, the home screen comprises a plurality of screens 301 and 302. On the home screens, shortcut keys 311a, 311b, 312a, 312b, 313, 314, 323, 324, 325, 326, and 327 for executing respective applications are displayed in the form of display boxes having attributes in accordance with an embodiment of the present invention.

The shortcut keys for executing the respective applications, depending on positions in which they are displayed, may be configured as display boxes that dynamically or statically represent data associated with their corresponding applications, or may be configured simply as icons for identifying the applications. For example, when the display box is positioned on a menu screen or an application tray, it may be configured simply as an icon for identifying the application; when the display box is positioned on a home screen, it may be configured as a display box that statically or dynamically represents data associated with its corresponding application.

In the embodiment shown in FIG. 3, when a display box is positioned on home screen 301, such as display boxes 311a, 311b, 312a, 312b, 313, and 314, it includes real-time information and/or data associated with its corresponding application, while on home screen 302, display boxes 323, 324, and 325 include data or contents associated with their applications and display boxes 326 and 327 provide paths for accessing particular parts of their applications. More specifically, the examples of display boxes configured to display real-time information of applications or data associated with set values of the applications in screen 301 of FIG. 3 are: dynamic display boxes 311a and 311b corresponding to a weather application, which display data associated with weather updated every predetermined time unit, dynamic display boxes 312a and 312b corresponding to a clock application, which display data associated with the current time, dynamic display box 313 corresponding to a date application, which displays data associated with a current date, and dynamic display box 314 corresponding to a stock application, which displays data associated with stocks (real-time stock price information of a stock item that is set in advance by a user).

The examples of display boxes configured to display data or contents associated with their corresponding applications in screen 302 of FIG. 3 are: display box 323 corresponding to a web browser application, which displays data associated with a bookmark of a Web browser, display box 324 corresponding to a contact application, which displays data associated with contact details, such as contact numbers, names, and pictures of recent (or frequent) contact users, and display box 325 corresponding to a camera application, which displays at least one of the images captured by a camera.

The examples of display boxes configured to provide paths for accessing particular parts of their applications in screen 302 of FIG. 3 are: mail display box 326 which shows a preset number of emails in an inbox and, if selected, enters the inbox and the audio setting display box 327 which provides a shortcut path to a screen for manipulating Wi-Fi, Bluetooth, or other sound settings.

In various embodiments of the present invention, the size of the display box may be changed in an editing mode of the home screen and/or data displayed in the display box may be dynamically changed according to the size of the display box. For example, if the user touches the display box on the home screen for a predetermined time or more, the user may enter a display box editing mode for adjusting the size of the display box and the size of the display box may be adjusted according to a touch input direction or touch input displacement by the user in the display box editing mode. The data displayed on the display box may also be dynamically changed based on the changing size of the display box.

Referring to FIG. 3, the user touches a region corresponding to the display box 311a of a first weather application for a predetermined time or more to enter the display box editing mode and sets the size of the display box 311 a equal to the size of the display box 311b of a second weather application. Thus, the display box 311a of the first weather application is displayed after its size is changed equal to the size of the display box 311b of the second weather application. The size-adjusted display box 311a of the first weather application may display more data than data displayed before size adjustment, like the display box 311b of the second weather application.

As illustrated in FIG. 3, on the home screen 302, shortcut keys 321 and 322 for executing respective applications are displayed in the form of folder icons in accordance with an embodiment of the present invention. At least one display box 322 may be included in the folder icon 321. The folder icon 321 and the least one display box 322 may be enlarged on the home screen 302 in response to a user selection.

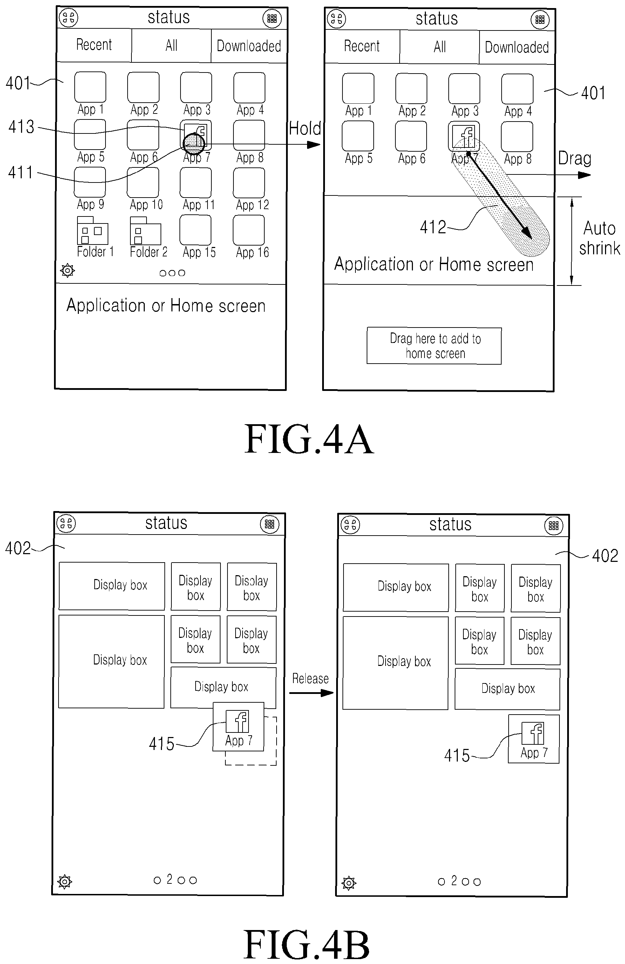

FIGS. 4A to 4G are diagrams showing movement of a display box using a method for managing a display box according to an embodiment of the present invention.

FIGS. 4A and 4B illustrate an operating process in which an icon in an application (APP) tray screen 401 is moved to the home screen, thereby becoming a dynamic display box. More specifically, after the user touches a region 411 in which an application is located, among regions in which applications included in the APP tray screen 401 are located, for a predetermined time or more to select the application, the user moves an icon 413 corresponding to the selected application according to a predetermined direction, movement, and/or placement 412. After the terminal displays the movement 412 of the icon 413 and terminates the APP tray screen 401, the home screen 402 is activated, as illustrated in FIG. 4B, and the icon 413 is disposed on the home screen 402 according to the user's touch input. When the icon 413 is disposed on the home screen 402, the icon 413 is changed into a display box 415 that is displayed on the home screen 402 and its attribute is changed to dynamic.

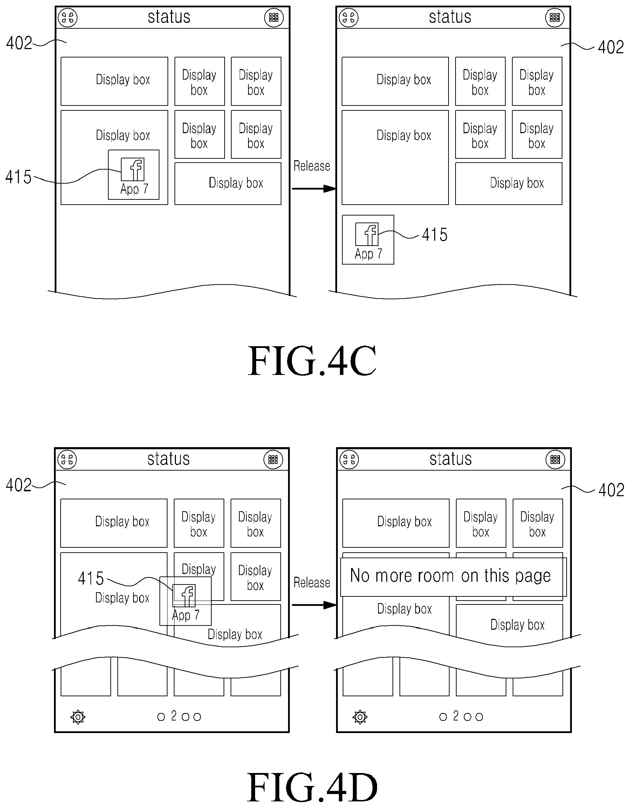

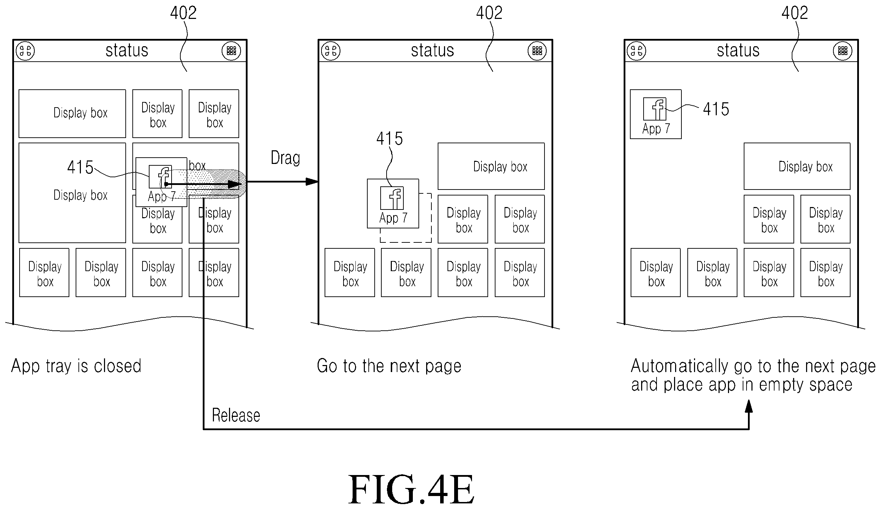

If there is an empty region into which the display box 415 may be inserted on the home screen 402 as illustrated in FIG. 4C, then the display box 415 may be inserted into the empty region. On the other hand, if there is no empty region into which the display box 415 may be inserted on the home screen 402 as illustrated in FIG. 4D, a message indicating there is no more room into which the display box 415 may be provided on the region where the display box 415 is located, without a screen change. As illustrated in FIG. 4E, the display box 415 may be moved between a plurality of home screens 402 and may be disposed in a user-desired position of a user-desired home screen among the plurality of home screens 402.

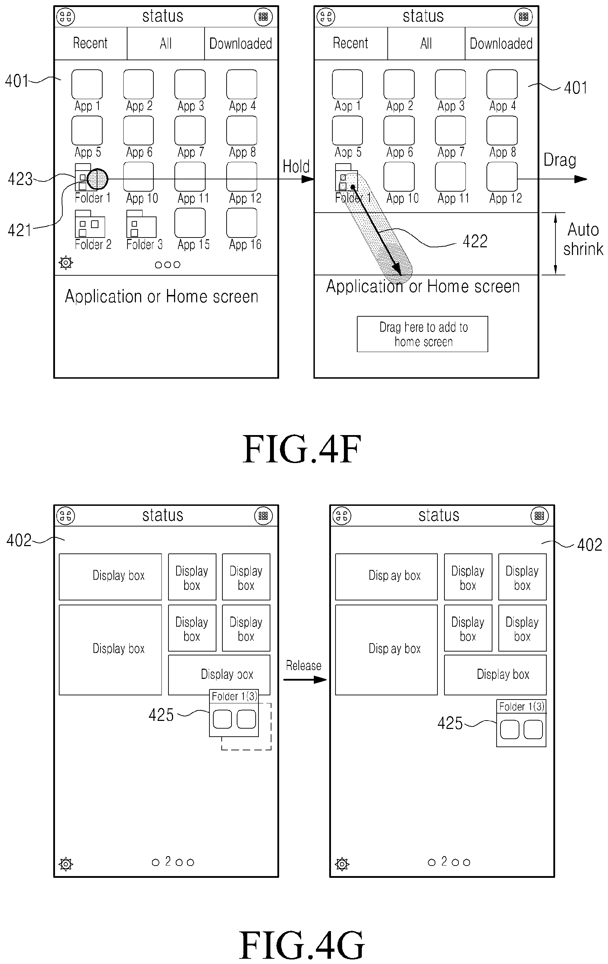

As illustrated in FIG. 4F, the APP tray screen 401 includes not only application icons, but also folder icons, by which each folder of the APP tray screen 401 may be moved to the home screen 402. For example, the user touches a region 421 where a folder is located, among regions where applications and folders included in the APP tray screen 401 are disposed, for a predetermined time or more, to select the folder, and then moves a folder icon 423 representing the selected folder according to a predetermined direction, movement, and/or placement 422, which the terminal displays and then terminates the APP tray screen 401. As illustrated in FIG. 4G, the home screen 402 is activated and the folder icon 423 is disposed on the home screen 402 according to the user's touch input. When the folder icon 423 is disposed on the home screen 402, the folder icon 423 is changed into a display box 425, but a display box 425 representing the materials corresponding to the folder icon 423 may display static data rather than dynamic data as described before.

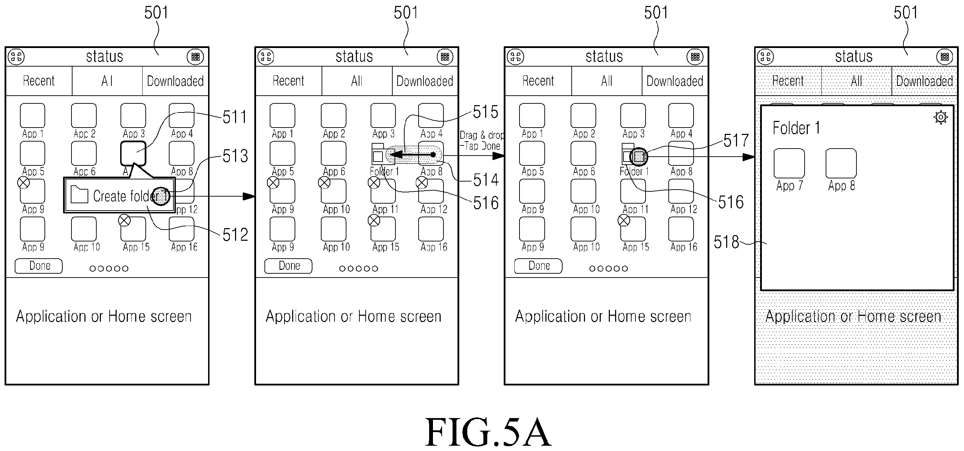

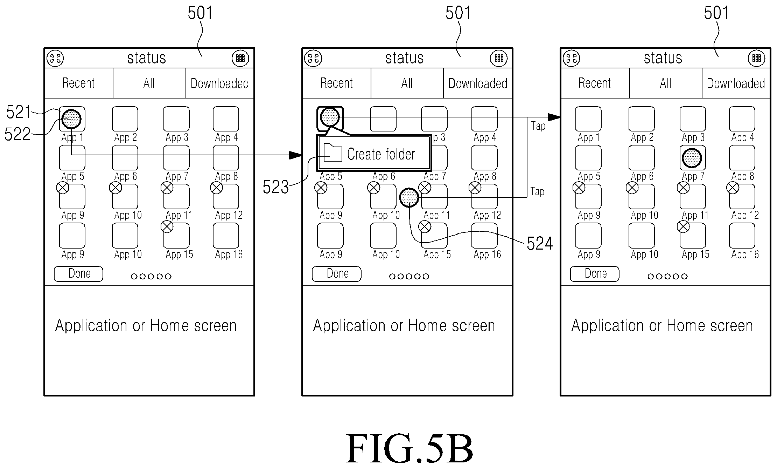

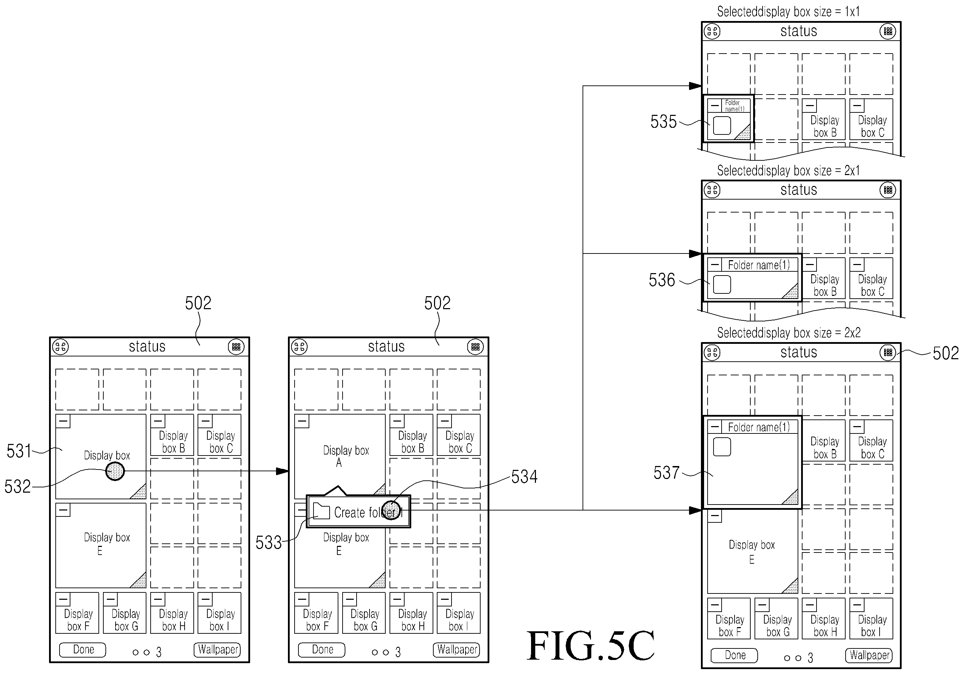

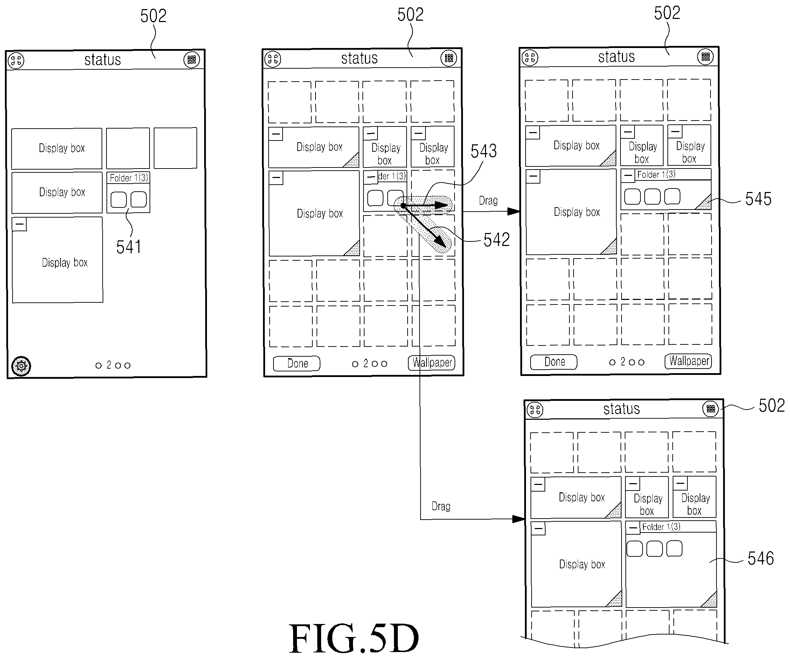

FIGS. 5A to 5D are diagrams showing folder management using display boxes according to an embodiment of the present invention. FIGS. 5A and 5B illustrate creation and management of a folder on an APP tray screen 501, and FIGS. 5C and 5D illustrate creation and management of a folder on a home screen 502.

Referring to FIG. 5A, when the user touches a region 511 where an icon representing an application is located on the APP tray screen 501 for a predetermined time or more, a menu 512 for folder creation is displayed on a corresponding region. If the user selects the folder creation menu 512 by touching that folder creation menu 512, as shown by 513, a new folder is created and its corresponding new folder icon 516 is displayed on the corresponding region. The folder icon 516 may be created in the region where the icon representing the application selected by the user is located, and the folder icon 516 may contain a size-reduced form of the icon representing the application.

In order to include one or more icons representing at least one application in the folder 516, an icon 514 representing an application may be selectively moved into the folder 516 by a user's input, as shown by 515. When the user selects the folder 516 as indicated by 517, the folder 516 and icons representing at least one application included in the folder 516 may be displayed in an enlarged form on the APP tray screen 501, as indicated by 518.

Referring to FIG. 5B, a user calls for a folder creation menu 523 by touching a region 521 where an icon representing an application is located for a predetermined time or more, as indicated by 522. The folder creation menu 523 is terminated when the user selects a region 524 other than where the folder creation menu 523 is located.

Referring to FIG. 5C, when the user touches a region 532 where a display box 531 is located, among regions where display boxes included in the home screen 502 are located, for a predetermined time or more, a menu 533 for folder creation is displayed on a corresponding region. When the user selects the folder creation menu 533 by touching that menu 533 as indicated by 534, a new folder is created and displayed on a corresponding region. The folder may be created in such a way as to maintain the size of the display box 531 like folder 537. For example, the folder may be created as the size of one by one unit like folder 535 when the size of the display box 531 is the size of the one by one unit, the folder may be created as the size of two by one unit like folder 536 when the size of the display box 531 is the size of two by one unit, and the folder may be created as the size of two by two unit like folder 537 when the size of the display box 531 is the size of two by two unit. Also, the folder may be created to automatically a predetermined limited size like folder 537 when the size of the display box 531 is more than the predetermined limited size(e.g. the size of the two by two unit). Further, the folder or may be created to automatically have the minimum size, like folder 536, or may be created at sizes which vary according to the number of display boxes included therein. The folder may be created in the region 532 where the display box 531 selected by the user was located, and the display box 531 which was located on the region 532 may be displayed in a size-reduced form in the created folder. The attribute of the display box 531 to be moved to the folder may be set to static.

As shown in FIG. 5D, the size of the folder may be changed by the user in the editing mode of the home screen 502. The user can enter display box editing mode if the user touches a display box folder 541 on the home screen 502 for a predetermined time or more. Once in the display box editing mode, the display box folder 541 may be adjusted in size by dragging corners and/or sides of display box folder 541. For example, dragging in direction 543 a side of display box folder 541 will create wider folder 545 and/or dragging in direction 542 a corner of display box folder 541 will create a folder 546 larger in height and width.

It will be appreciated by those of ordinary skill in the art that embodiments of the present invention may be implemented in hardware, software, or a combination of hardware and software. The software may be stored as program instructions or computer-readable codes on a non-transitory computer-readable medium and executable on a processor. Examples of non-transitory computer-readable media include magnetic storage media (e.g., ROM, floppy disks, hard disks, etc.) and optical recording media (e.g., CD-ROMs, or DVDs). The computer readable code can also be distributed and stored on network coupled computer systems so that it is executed in a distributed fashion.

The terminal may receive and store the program from a program provider on a wired or wireless connection. The program provider may include a memory for storing a program having instructions to carry out the method, information required for the method, etc., a communication unit for conducting wired or wireless communication, and a controller for controlling transmission of the program. The program provider may provide the program to the terminal wired or wirelessly at the request of the portable terminal or without a request from the terminal, e.g., if the terminal is located within a particular range.

While the present invention has been particularly shown and described with reference to embodiments thereof, it will be understood by those of ordinary skill in the art that various changes in form and details may be made therein without departing from the scope of the present invention as defined by the following claims .

## Claims

1. A method for display box management on a terminal (101) comprising a display unit with a touch screen, the method comprising:
displaying a first screen (401) comprising at least one icon;
in response to receiving a user input comprising a touch of an icon (413) of the at least one icon in the first screen (401) for a predetermined time, the icon (413) corresponding to an application, the method being **characterised in**
displaying a second screen (402) comprising the icon (413) disposed at a region on which the touch is maintained, wherein the second screen (402) is different from the first screen (401) and the icon (413) is moved according to a move of the touch while the touch is maintained;
in response to detecting that the user input is released, displaying a display box (415) corresponding to the icon (413) and the application at a region on which the icon (413) is disposed, and changing an attribute of the display box (415) to be dynamic to dynamically display data associated with the application updated every predetermined time unit; and
in response to the data associated with the application being changed, displaying the changed data in the display box (415).

2. The method of claim 1, wherein the attribute of the display box (415) is set to be static when the first screen on which the icon (413) is located comprises an Application, APP, tray screen.

3. The method of claim 1, wherein the attribute of the display box (415) is set to be dynamic when the second screen on which the display box (415) is located comprises a home screen.

4. The method of claim 1, further comprising:
determining whether the display box (415) is located in a folder; and
setting the attribute of the display box (415) to static if the display box (415) is located in the folder.

5. The method of claim 1, further comprising:
adjusting a size of the display box (415) according to a user's input; and
updating and displaying corresponding data suitably for the adjusted size of the display box (415).

6. A terminal device comprising:
a display unit with a touch screen,
an input interface;
at least one controller; and
a memory configured to store at least a display box management program, wherein the display box management program is executed by the controller and comprises instructions for:
displaying a first screen (401) comprising at least one icon;
in response to receiving a user input comprising a touch of an icon (413) of the at least one icon in the first screen (401) for a predetermined time, the icon (413) corresponding to an application, the terminal device being **characterised in** displaying a second screen (402) comprising the icon (413) disposed at a region on which the touch is maintained, wherein the second screen (402) is different from the first screen (401) and the icon (413) is moved according to a move of the touch while the touch is maintained;
in response to detecting that the user input is released, displaying a display box (415) corresponding to the icon (413) and the application at a region on which the icon (413) is disposed, and changing an attribute of the display box (415) to be dynamic to dynamically display data associated with the application updated every predetermined time unit; and
in response to the data associated with the application being changed, displaying the changed data in the display box (415).

7. A non-transitory computer-readable storage medium having stored thereon at least one program for a terminal device comprising a display with a touch screen,
the program comprising instructions for:
displaying a first screen (401) comprising at least one icon;
in response to receiving a user input comprising a touch of an icon (413) of the at least one icon in the first screen (401) for a predetermined time, the icon (413) corresponding to an application, the program being **characterised in**
J displaying a second screen (402) comprising the icon (413) disposed at a region on which the touch is maintained, wherein the second screen (402) is different from the first screen (401) and the icon (413) is moved according to a move of the touch while the touch is maintained;
in response to detecting that the user input is released, displaying a display box (415) corresponding to the icon (413) and the application at a region on which the icon (413) is disposed, and changing an attribute of the display box (415) to be dynamic to dynamically display data associated with the application updated every predetermined time unit; and
in response to the data associated with the application being changed, displaying the changed data in the display box (415).

## Patentansprüche

1. Verfahren zur Anzeigefeld-Verwaltung an einem Endgerät (101), das eine Anzeigeeinheit mit einem Touchscreen umfasst, wobei das Verfahren umfasst:
Anzeigen eines ersten Bildschirms (401), der mindestens ein Symbol umfasst;
als Reaktion auf das Empfangen einer Benutzereingabe, die ein Berühren eines Symbols (413) des mindestens einen Symbols auf dem ersten Bildschirm (401) für eine vorbestimmte Zeit umfasst, wobei das Symbol (413) einer Anwendung entspricht, das Verfahren **gekennzeichnet ist durch** Anzeigen eines zweiten Bildschirms (402), der das Symbol (413) umfasst, das in einem Bereich angeordnet ist, in dem die Berührung aufrechterhalten wird, wobei der zweite Bildschirm (402) sich vom ersten Bildschirm (401) unterscheidet und das Symbol (413) gemäß einer Bewegung der Berührung bewegt wird, während die Berührung aufrechterhalten wird;
als Reaktion auf das Erfassen, dass die Benutzereingabe freigegeben ist, Anzeigen eines Anzeigefeldes (415), das dem Symbol (413) und der Anwendung in einem Bereich, in dem das Symbol (413) angeordnet ist, entspricht, und Ändern eines Attributs des Anzeigefeldes (415) so, dass es dynamisch ist, um der Anwendung zugeordnete Daten, die jede vorbestimmte Zeiteinheit aktualisiert werden, dynamisch anzuzeigen; und
als Reaktion darauf, dass die der Anwendung zugeordneten Daten geändert werden, Anzeigen der geänderten Daten im Anzeigefeld (415).

2. Verfahren nach Anspruch 1, wobei das Attribut des Anzeigefeldes (415) so gesetzt ist, dass es statisch ist, wenn der erste Bildschirm, auf dem sich das Symbol (413) befindet, einen Anwendungs, APP, -Tray-Bildschirm umfasst.

3. Verfahren nach Anspruch 1, wobei das Attribut des Anzeigefeldes (415) so gesetzt ist, dass es dynamisch ist, wenn der zweite Bildschirm, auf dem sich das Anzeigefeld (415) befindet, einen Startbildschirm umfasst.

4. Verfahren nach Anspruch 1, ferner umfassend:
Bestimmen, ob sich das Anzeigefeld (415) in einem Ordner befindet; und
Setzen des Attributs des Anzeigefeldes (415) auf statisch, wenn sich das Anzeigefeld (415) im Ordner befindet.

5. Verfahren nach Anspruch 1, ferner umfassend:
Einstellen einer Größe des Anzeigefeldes (415) gemäß einer Benutzereingabe; und
Aktualisieren und Anzeigen entsprechender Daten, die für die eingestellte Größe des Anzeigefeldes (415) geeignet sind.

6. Endgerät, umfassend:
eine Anzeigeeinheit mit einem Touchscreen,
eine Eingabeschnittstelle;
mindestens eine Steuerung; und
einen Speicher, der konfiguriert ist, um mindestens ein Anzeigefeld-Verwaltungsprogramm zu speichern, wobei das Anzeigefeld-Verwaltungsprogramm von der Steuerung ausgeführt wird und Anweisungen umfasst zum:
Anzeigen eines ersten Bildschirms (401), der mindestens ein Symbol umfasst;
als Reaktion auf das Empfangen einer Benutzereingabe, die eine Berührung eines Symbols (413) des mindestens einen Symbols auf dem ersten Bildschirm (401) für eine vorbestimmte Zeit umfasst, wobei das Symbol (413) einer Anwendung entspricht, das Endgerät **gekennzeichnet ist durch**
Anzeigen eines zweiten Bildschirms (402), der das Symbol (413) umfasst, das in einem Bereich angeordnet ist, in dem die Berührung aufrechterhalten wird, wobei sich der zweite Bildschirm (402) von dem ersten Bildschirm (401) unterscheidet und das Symbol (413) entsprechend einer Bewegung der Berührung bewegt wird, während die Berührung aufrechterhalten wird;
als Reaktion auf das Erfassen, dass die Benutzereingabe freigegeben ist, Anzeigen eines Anzeigefeldes (415), das dem Symbol (413) und der Anwendung in einem Bereich, in dem das Symbol (413) angeordnet ist, entspricht, und Ändern eines Attributs des Anzeigefeldes (415) so, dass es dynamisch ist, um der Anwendung zugeordnete Daten, die jede vorbestimmte Zeiteinheit aktualisiert werden, dynamisch anzuzeigen; und
als Reaktion darauf, dass die der Anwendung zugeordneten Daten geändert werden, Anzeigen der geänderten Daten im Anzeigefeld (415).

7. Nichtflüchtiges computerlesbares Speichermedium, auf dem mindestens ein Programm für ein Endgerät gespeichert ist, das eine Anzeige mit einem Touchscreen umfasst;
wobei das Programm Anweisungen umfasst zum:
Anzeigen eines ersten Bildschirms (401), der mindestens ein Symbol umfasst;
als Reaktion auf das Empfangen einer Benutzereingabe, die eine Berührung eines Symbols (413) des mindestens einen Symbols auf dem ersten Bildschirm (401) für eine vorbestimmte Zeit umfasst, wobei das Symbol (413) einer Anwendung entspricht, das Programm **gekennzeichnet ist durch**
Anzeigen eines zweiten Bildschirms (402), der das Symbol (413) umfasst, das in einem Bereich angeordnet ist, in dem die Berührung aufrechterhalten wird, wobei sich der zweite Bildschirm (402) von dem ersten Bildschirm (401) unterscheidet und das Symbol (413) entsprechend einer Bewegung der Berührung bewegt wird, während die Berührung aufrechterhalten wird;
als Reaktion auf das Erfassen, dass die Benutzereingabe freigegeben ist, Anzeigen eines Anzeigefeldes (415), das dem Symbol (413) und der Anwendung in einem Bereich, in dem das Symbol (413) angeordnet ist, entspricht, und Ändern eines Attributs des Anzeigefeldes (415) so, dass es dynamisch ist, um der Anwendung zugeordnete Daten, die jede vorbestimmte Zeiteinheit aktualisiert werden, dynamisch anzuzeigen; und
als Reaktion darauf, dass die der Anwendung zugeordneten Daten geändert werden, Anzeigen der geänderten Daten im Anzeigefeld (415).

## Revendications

1. Procédé de gestion de boîte d'affichage sur un terminal (101) comprenant une unité d'affichage avec un écran tactile, le procédé comprenant :
l'affichage d'un premier écran (401) comprenant au moins une icône ;
en réponse à la réception d'une entrée d'utilisateur comprenant un toucher d'une icône (413) de l'au moins une icône sur le premier écran (401) pendant une durée prédéterminée, l'icône (413) correspondant à une application, le procédé étant **caractérisé par**
l'affichage d'un deuxième écran (402) comprenant l'icône (413) disposée dans une région sur laquelle le toucher est maintenu, dans lequel le deuxième écran (402) est différent du premier écran (401) et l'icône (413) est déplacée selon un mouvement du toucher tandis que le toucher est maintenu ;
en réponse à la détection que l'entrée d'utilisateur est libérée, l'affichage d'une boîte d'affichage (415) correspondant à l'icône (413) et à l'application dans une région sur laquelle l'icône (413) est disposée, et le changement d'un attribut de la boîte d'affichage (415) pour être dynamique pour afficher dynamiquement des données associées à l'application mises à jour à chaque unité de temps prédéterminée ; et
en réponse au changement des données associées à l'application, l'affichage des données changées dans la boîte d'affichage (415).

2. Procédé selon la revendication 1, dans lequel l'attribut de la boîte d'affichage (415) est réglé pour être statique lorsque le premier écran sur lequel l'icône (413) est située comprend un écran de plateau d'application, APP.

3. Procédé selon la revendication 1, dans lequel l'attribut de la boîte d'affichage (415) est réglé pour être dynamique lorsque le deuxième écran sur lequel la boîte d'affichage (415) est située comprend un écran d'accueil.

4. Procédé selon la revendication 1, comprenant en outre :
la détermination si la boîte d'affichage (415) est située dans un dossier ; et
le réglage de l'attribut de la boîte d'affichage (415) sur statique si la boîte d'affichage (415) est située dans le dossier.

5. Procédé selon la revendication 1, comprenant en outre :
l'ajustement d'une taille de la boîte d'affichage (415) en fonction d'une entrée d'utilisateur ; et
la mise à jour et l'affichage de données correspondantes de manière appropriée pour la taille ajustée de la boîte d'affichage (415).

6. Dispositif terminal comprenant :
une unité d'affichage avec un écran tactile,
une interface d'entrée ;
au moins un contrôleur ; et
une mémoire configurée pour stocker au moins un programme de gestion de boîte d'affichage, dans lequel le programme de gestion de boîte d'affichage est exécuté par le contrôleur et comprend des instructions pour :
l'affichage d'un premier écran (401) comprenant au moins une icône ;
en réponse à la réception d'une entrée d'utilisateur comprenant un toucher d'une icône (413) de l'au moins une icône sur le premier écran (401) pendant une durée prédéterminée, l'icône (413) correspondant à une application, le dispositif terminal étant **caractérisé par**
l'affichage d'un deuxième écran (402) comprenant l'icône (413) disposée dans une région sur laquelle le toucher est maintenu, dans lequel le deuxième écran (402) est différent du premier écran (401) et l'icône (413) est déplacée selon un mouvement du toucher tandis que le toucher est maintenu ;
en réponse à la détection que l'entrée d'utilisateur est libérée, l'affichage d'une boîte d'affichage (415) correspondant à l'icône (413) et à l'application dans une région sur laquelle l'icône (413) est disposée, et le changement d'un attribut de la boîte d'affichage (415) pour être dynamique pour afficher dynamiquement des données associées à l'application mises à jour à chaque unité de temps prédéterminée ; et
en réponse au changement des données associées à l'application, l'affichage des données changées dans la boîte d'affichage (415).

7. Support de stockage non transitoire lisible par ordinateur sur lequel est stocké au moins un programme pour un dispositif terminal comprenant un affichage avec un écran tactile,
le programme comprenant des instructions pour :
l'affichage d'un premier écran (401) comprenant au moins une icône ;
en réponse à la réception d'une entrée d'utilisateur comprenant un toucher d'une icône (413) de l'au moins une icône sur le premier écran (401) pendant une durée prédéterminée, l'icône (413) correspondant à une application, le programme étant **caractérisé par**
l'affichage d'un deuxième écran (402) comprenant l'icône (413) disposée dans une région sur laquelle le toucher est maintenu, dans lequel le deuxième écran (402) est différent du premier écran (401) et l'icône (413) est déplacée selon un mouvement du toucher tandis que le toucher est maintenu ;
en réponse à la détection que l'entrée d'utilisateur est libérée, l'affichage d'une boîte d'affichage (415) correspondant à l'icône (413) et à l'application dans une région sur laquelle l'icône (413) est disposée, et le changement d'un attribut de la boîte d'affichage (415) pour être dynamique pour afficher dynamiquement des données associées à l'application mises à jour à chaque unité de temps prédéterminée ; et
en réponse au changement des données associées à l'application, l'affichage des données changées dans la boîte d'affichage (415).
